(19) Europäisches Patentamt

European Patent Office

Office européen des brevets

(11) Veröffentlichungsnummer: **0 513 524 A2**

# (12) EUROPÄISCHE PATENTANMELDUNG

(21) Anmeldenummer: **92106109.9**

(22) Anmeldetag: **09.04.92**

(51) Int. Cl.⁵: **B24B 27/06**

(30) Priorität: **17.05.91 CH 1487/91**

(43) Veröffentlichungstag der Anmeldung:
**19.11.92 Patentblatt 92/47**

(84) Benannte Vertragsstaaten:
**AT BE CH DE DK ES FR GB IT LI LU NL SE**

(71) Anmelder: **Georg Fischer
Rohrleitungssysteme AG
Amsler-Laffon-Strasse 9**
**CH-8201 Schaffhausen(CH)**

(72) Erfinder: **Fahr, Markus
Am Breitenstein 17
W-7702 Gottmadingen(DE)**

(74) Vertreter: **Szilagyi, Marianne et al
Georg Fischer Management AG,
Mühlentalstrasse 105
CH-8201 Schaffhausen(CH)**

(54) Rohrtrennvorrichtung.

(57) Die Rohrtrennvorrichtung weist einen aus zwei Rahmen-Teilen (1a, 1b) zusammenspannbaren Rahmen (1) auf, welcher Führungen (4) für ein um das zu trennende Rohr (5) bewegbare Schneidvorrichtung (3) aufweist. An einem Rahmen-Teil (1a) ist eine Rohr-Spannvorrichtung (2) mit das Rohr in zentrischer Lage zum Rahmen (1) spannenden Spannbacken (12) angeordnet.

Fig.1

EP 0 513 524 A2

Die Erfindung betrifft eine Rohrtrennvorrichtung, wie sie im Oberbegriff von Anspruch 1 beschrieben ist.

Eine entsprechende Rohrtrennvorrichtung ist durch die Schrift DE-U1-85 26 364.8 bekanntgeworden. Hierbei besteht die Rohrspannvorrichtung aus vier jeweils mittels Schrauben gegen das Rohr druckbaren Spannbacken, wobei jeweils zwei an jedem Rahmen-Teil angeordnet sind. Aufgrund dieser Bauweise ist es schwierig, das Rohr zentrisch zum umlaufenden Schneidewerkzeug zu spannen, wobei der Spannvorgang durch Betätigung von vier Schrauben nacheinander sehr langwierig ist. Damit das Schneidewerkzeug zum Rohr besser ausgerichtet werden kann, weist diese Vorrichtung einen zweiten zweiteiligen Rahmen mit der Führung für das Schneidewerkzeug auf, welcher mittels Stellschrauben am ersten Rahmen einstellbar befestigt ist. Diese Bauweise erfordert eine lange Einrichtzeit und ist sehr aufwendig.

Aufgabe der vorliegenden Erfindung ist die Schaffung einer Rohrtrennvorrichtung der eingangs genannten Art welche durch eine einfach Bauweise gekennzeichnet ist und mittels welcher ein rasches und zum umlaufenden Werkzeug zentrisches Spannen des Rohres gewährleistet ist.

Erfindungsgemäss wird diese Aufgabe durch die kennzeichnenden Merkmale von Anspruch 1 gelöst.

Vorteilhafte Ausgestaltungen der Erfindung sind in den abhängigen Ansprüchen gekennzeichent.

Durch die Anordnung der Rohr-Spannvorrichtung an einem Rahmen-Teil und deren Ausbildung mit gleichzeitig verschiebbaren Spannbacken ist ein einfaches zentrisches Spannen des Rohres gewährleistet.

Dies gewährleistet auch eine einfache Handhabung des Rohrtrenngerätes bei bereits z.B. in Gräben verlegten Rohrleitung als tragbares Gerät als auch dessen Verwendung als stationäres Gerät.

Die Erfindung ist in den beiliegenden Zeichnungen beispielsweise dargestellt und nachfolgend beschrieben. Es zeigen:

Fig. 1      eine Seitenansicht einer Rohrtrennvorrichtung

Fig. 2      ein Schnitt entlang der Linie II - II von Fig. 1 ohne Schneidvorrichtung

Fig. 3      ein Teilschnitt entlang der Linie III - III von Fig. 2 in vergrösserter Darstellung und

Fig. 4      eine vereinfachte Darstellung einer stationären Rohrtrennvorrichtung

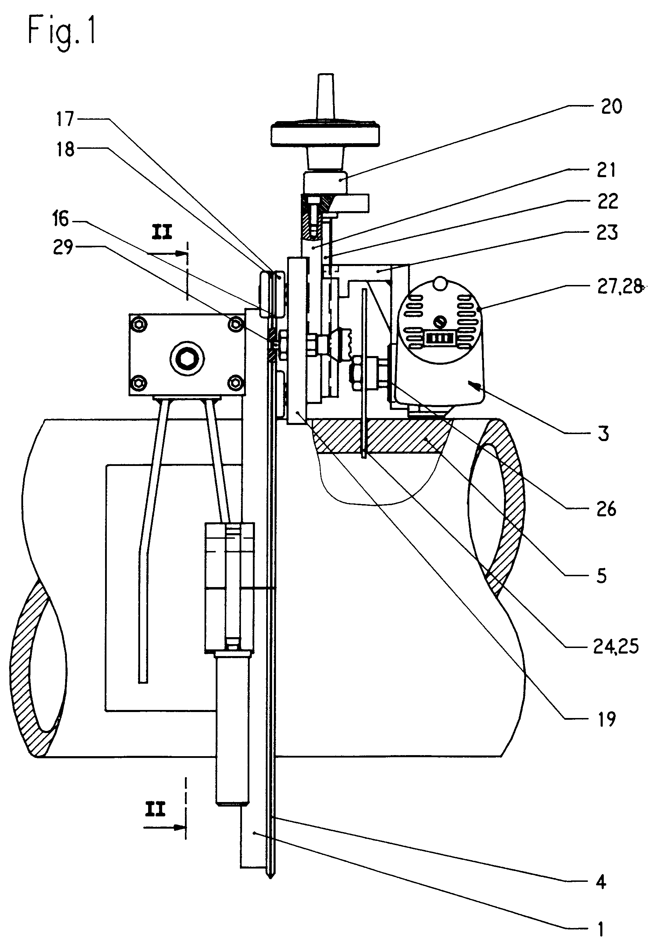

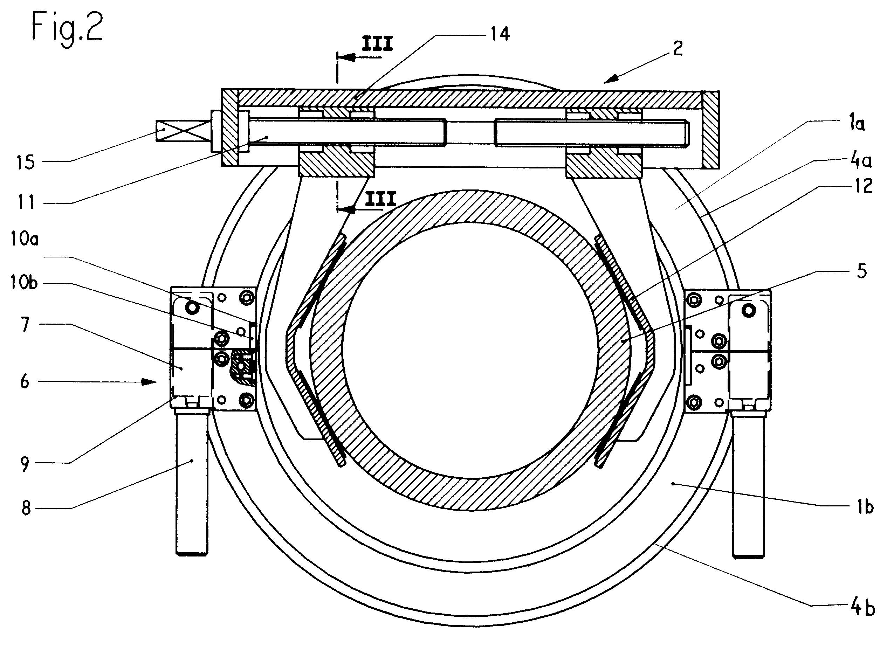

Die in der Fig. 1 und 2 gezeigte Rohrtrennvorrichtung besteht aus einem Rahmen 1 mit einer Führung 4, einer Rohr-Spannvorrichtung 2 und einer an der Führung 4 um das Rohr 5 bewegbaren Schneidvorrichtung 3. Der Rahmen 1 besteht aus zwei als halbkreisförmige Ringe ausgebildete Rahmen-Teile 1a und 1b, an desen einer Stirnseite halbkreisringförmigen Führungsteile 4a, 4b angeordnet sind, welche im mittels Schnellspannvorrichtungen 6 zusammengespannten Zustand der Rahmen-Teile 1a, 1b die kreisringförmige Führung 4 bilden.

Jede Schnellspannvorrichtung 6 weist ein schwenkbar an einem Rahmen-Teil 1a befestigtes Spannschraubelement 7 mit einem Handgriff 8 auf, welches gegen ein am anderen Rahmen-Teil 1b befestigtes Spannteil 9 durch Drehen des Handgriffes 8 verspannbar ist. Zur Fixierung der beiden Rahmen-Teile 1a, 1b zueinander in zentrischer Lage ist an einem Rahmen-Teil 1b eine in eine Ausnehmung 10a des anderen Rahmen-Teils 1a eingreifende Nase 10b angeordnet.

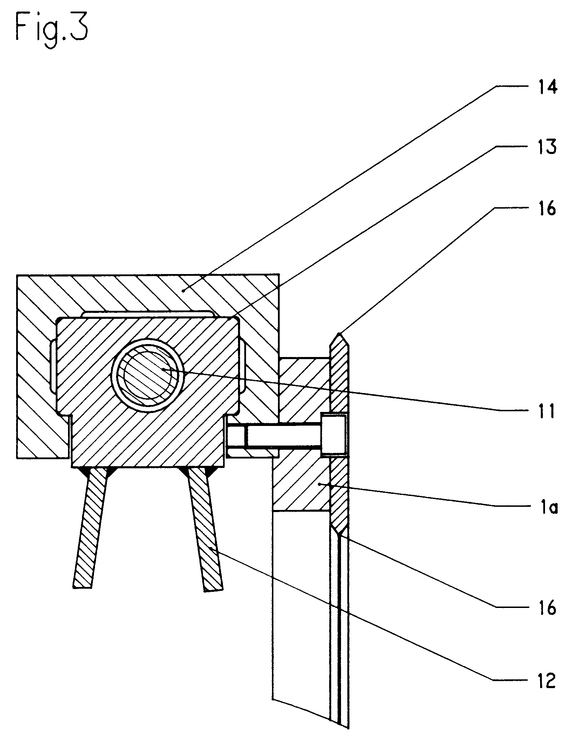

Die Rohr-Spannvorrichtung 2 ist an einem Rahmen-Teil 1a angeordnet und weist mittels einer Gewindespindel 11 gegenläufig verschiebbare Spannbacken 12 auf. Die Spannbacken 12 sind V-förmig ausgebildet und gewährleisten eine zum Rahmen 1 zentrische Halterung des Rohres 5, wobei die spannbacken 12 in einer prismatischen Führung 13 eines im Querschnitt U-förmigen Führungskastens 14 geradlinig verschiebbar geführt sind. (Siehe Fig. 3 ) An einem Ende des Führungskastens 14 ist die Gewindespindel 11 axial gehalten, drehbar gelagert und weist einen Mehrkant 15 zur Verstellung des Spannbacken 12 auf. Der Führungskasten 14 ist an der, der Führung 4 gegenüberliegenden Stirnseite des Rahmen-Teils 1a befestigt.

Die Führung 4 für die Schneidevorrichtung 3 weist je eine am Aussenumfang und am Innenumfang V-förmig ausgebildete Führungsbahn 16 auf. Je zwei Rollen 17 mit V-förmigen Führungsrillen 18 greifen in die innere und äussere Führungsbahn 16 ein, wobei die Rollen 17 an einem Lagerbock 19 entsprechend angeordnet sind. Am Lagerbock 19 ist eine, mit einer Geradführung 21 und einem Spindeltrieb 22 versehene Verstelleinrichtung 20 angeordnet, mittels welcher das auf einem Schlitten 23 angeordnete Schneidwerkzeug 24 in radialer Richtung zum Rohr 5 verstellbar ist.

Im dargestellten Ausführungsbeispiel ist das Schneidwerkzeug 24 eine motorisch antreibbare Kreissäge 25, wobei der mit einem Winkeltrieb 26 versehene Elektroantrieb 27 am Schlitten 23 befestigt ist und gleichzeitig als Handgriff 28 für die Bewegung des Schneidwerkzeugs entlang der Führung 4 um das Rohr 5 ausgebildet ist.

Das Schneidwerkzeug 24 kann auch als Schneidmesser und/oder als Anfaswerkzeug ausgebildet sein.

Damit die umfangsmässige Vorschubbewegung beim Trennen nur in der vom Schneidwerkzeug 24 vorgegebenen Schneidrichtung erfolgen kann, ist es vorteihaft, wenn am Lagerbock 19 oder an den Rollen 17 eine weiter nicht dargestellte Sperreinrichtung für die Umfangsbewegung nur in einer Richtung angeordnet ist.

Mittels eines Arretierbolzen 29 ist die Schneidvorrichtung 3 in einer oder mehreren Umfangslagen an der Führung 4 arretierbar. Als Ausführungsvariante kann auch eine weiter nicht dargestellte Klemmeinrichtung angeordnet werden, mittels welcher die Schneidvorrichtung 3 in jeder Umfangslage an der Führung 4 festklemmbar ist.

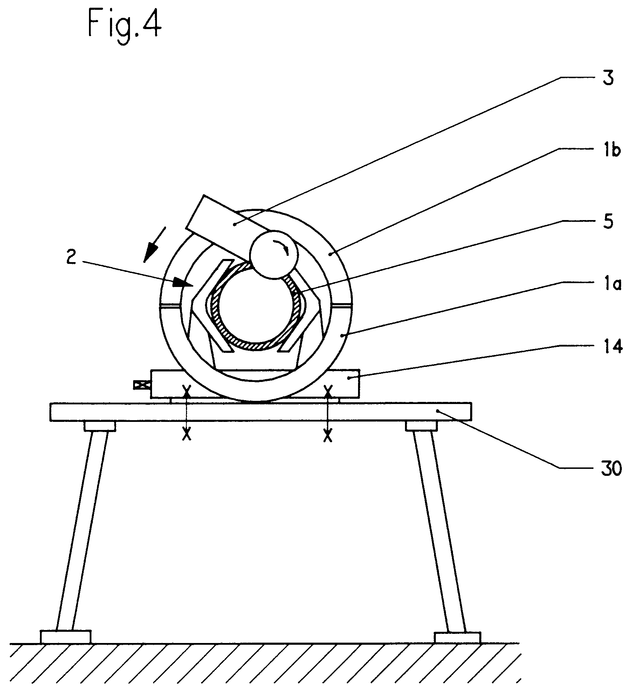

Die Rohrtrennvorrichtung ist als tranportables Gerät zum Einsatz am Verlegungsort der Rohre als auch als stationäres Gerät zur Befestigung auf einer Werkbank 30 gemäss Fig. 4 geeignet. Hierbei wird das Rahmen-Teil 1a mit dem Führungskasten 14 entweder direkt auf der Werkbank 30 oder in einem Schraubstock befestigt wobei dann das zu trennende Rohr 5 von oben eingelegt, mittels der Rohr-Spannvorrichtung 2 zentriert gehalten wird. Nach dem Aufsetzen des Rahmenteils 1b kann die Trennung mit der Schneidvorrichtung 3 erfolgen. Kürzere Rohre können axial in die Rohr-Spannvorrichtung 2 eingeschoben werden.

Bei bereits in Gräben verlegten Rohren kann das Rahmenteil 1a von oben auf das Rohr aufgesetz und mittels der Rohr-Spannvorrichtung zentriert werden. Nach Drehen des Rahmen-Teils 1a um 180° kann dann das zweite Rahmen-Teil 1b aufgesetzt und mit dem ersten Rahmen-Teil 1 a verspannt werden wonach der Trennvorgang erfolgen kann.

Die Rohrtrennvorrichtung ist je nach den Platzverhältnissen in jeder beliebigen Umfangslage auf das Rohr aufsetzbar.

## Patentansprüche

1. Rohrtrennvorrichtung mit einem das Rohr umgreifenden und aus zwei zusammenspannbaren Teilen bestehenden Rahmen, welcher Führungen für eine um das Rohr bewegbare Schneidvorrichtung aufweist und mit einer Rohr-Spannvorrichtung, dadurch gekennzeichent, dass die Rohr-Spannvorrichtung (2) an einem der beiden radial zusammenspannbaren Rahmen-Teile (1a) angeordnet ist und zwei gegenläufig verschiebbare Spannbacken (12) aufweist.

2. Rohrtrennvorrichtung nach Anspruch 1, dadurch gekennzeichnet dass am Rahmen-Teil (1a), ein Führungskasten (14) mit einer Gerad-Führung (13) und einer Gewindespindel (11) für die Spannbacken (12) befestigt ist.

3. Rohrtrennvorrichtung nach Anspruch 1 oder 2, dadurch gekennzeichent, dass die Spannbakken (12) für eine zum Rahmen (1) zentrische Halterung des Rohres (5) V-Förmig ausgebildet sind.

4. Rohrtrennvorrichtung nach einem der Ansprüche 1 bis 3, dadurch gekennzeichnet, dass die Rahmen-Teile (1a, 1b) aus je einem halbkreisförmigen Ring bestehen und mittels zwei Schnellspannvorrichtungen (6) zusammenspannbar sind.

5. Rohrtrennvorrichtung nach Anspruch 4, dadruch gekennzeichnet, dass die Schnellspannvorrichtung (6) ein, an einem Rahmenteil (1a) schwenkbar befestigtes, mit einem Handgriff (8) versehenes Spannschraubelement (7) aufweist.

6. Rohrtrennvorrichtung nach einem der Ansprüche 1 bis 5, dadurch gekennezeichnet, dass die Führung (4) für die Schneidvorrichtung (3) aus an den Rahmen-Teilen (1a, 1b) an einer Stirnseite angeordneten halbkreisringförmigen Führungsteilen (4a, 4b) besteht, welche je eine am Aussenumfang und am Innenumfang V-förmig ausgebildete Führungsbahn (16) aufweisen.

7. Rohrtrennvorrichtung nach Anspruch 6, dadurch gekennzeichnet, dass die Schneidvorrichtung (3) mittels auf der äusseren und der inneren Führungsbahn (16) laufenden Rollen (17)an dem Rahmen (1) um das Rohr (5) bewegbar angeordnet ist.

8. Rohrtrennvorrichtung nach einem der Ansprüche 1 bis 7, dadurch gekennzeichnet, dass die Schneidvorrichtung (3) eine motorisch antreibare Kreistrennsäge (25) aufweist und mittels einer Verstelleinrichtung (20) radial zum Rohr (5) verschiebar ist.

9. Verwendung der Rohrtrennvorrichtung nach einem der Ansprüche 1 bis 8, als transportables Gerät zum Aufsetzen auf das zu trennende Rohr (5) z.B. am Verlegungsort.

10. Verwendung der Rohrtrennvorrichtung nach einem der Ansprüche 1 bis 8 als stationäres Gerät, wobei das mit der Rohr-Spannvorrichtung (2) versehene Rahmenteil (1a) auf z.B. einer Werkbank (30) befestigbar ist und das zu trennende Rohr (5) in den Rahmenteil (1a) einlegbar und mit der Rohr-Spannvorrichtung (2) vor Aufsetzen des zweiten Rahmen-Teils (1b) festspannbar ist.

# Fig.1

Fig.2

Fig.3

14

13

16

11

1a

16

12

Fig.4